# EUROPÄISCHE PATENTSCHRIFT

(11) **EP 3 902 206 B1**
(45) Veröffentlichungstag und Bekanntmachung des Hinweises auf die Patenterteilung: **16.02.2022**
(21) Anmeldenummer: 20170672.8
(22) Anmeldetag: 21.04.2020
(51) Int. Cl.: H04L 12/40

(54) **FEHLERTOLERANTE VERTEILEREINHEIT UND VERFAHREN ZUR BEREITSTELLUNG EINER FEHLERTOLERANTEN GLOBALEN ZEIT**
FAULT TOLERANT DISTRIBUTION UNIT AND METHOD FOR PROVIDING FAULT TOLERANT GLOBAL TIME
UNITÉ DE DISTRIBUTION TOLÉRANTE AUX ERREURS ET PROCÉDÉ DE FOURNITURE D'UN TEMPS MONDIAL TOLÉRANT AUX ERREURS

(43) Veröffentlichungstag der Anmeldung: 27.10.2021
(73) Patentinhaber: TTTech Computertechnik Aktiengesellschaft, 1040 Wien (AT)
(72) Erfinder: Kopetz, Hermann, 2500 Baden (AT)
(74) Vertreter: Patentanwaltskanzlei Matschnig & Forsthuber OG

(56) Entgegenhaltungen:
- EP-A1- 3 157 187
- WO-A1-2011/123877
- WO-A1-2015/123712
- US-A1- 2009 083 466

## Beschreibung

Die Erfindung betrifft ein Verfahren zur Bereitstellung einer *fehlertoleranten globalen Zeit* und zum *fehlertoleranten Transport von zeitgesteuerten Nachrichten* in einem verteilten Echtzeitcomputersystem, welches *externe Computer* und eine fehlertolerante Nachrichtenverteilereinheit, FTNVE, umfasst, wobei jeder externe Computer ein externer Sender und/oder ein externer Empfänger von Nachrichten sein kann. Ein solches Verfahren ist aus der US 2009/083466 A1 bekannt.

Weiters betrifft die Erfindung eine FTNVE. Schließlich betrifft die Erfindung ein verteiltes Echtzeitcomputersystem mit einer FTNVE.

Ein verteiltes Echtzeitcomputersystem zur Steuerung eines kritischen Prozesses umfasst eine Anzahl von externen Computern, die unter Einsatz einer fehlertolerante Nachrichten-Verteilereinheit, FTNVE, zeitgesteuerte Nachrichten austauschen.

Es ist eine Aufgabe der Erfindung, anzugeben, wie eine fehlertolerante globale Zeit bereitgestellt werden kann.

Diese Aufgabe wird mit einem eingangs genannten Verfahren dadurch gelöst, dass erfindungsgemäß die FTNVE mindestens vier *Komponenten* umfasst, eine erste Komponente, eine zweite Komponente, eine dritte Komponente, und eine vierte Komponente, wobei jede der vier Komponenten über zwei oder zumindest zwei unabhängige *Kommunikationsrouten* mit den anderen drei Komponenten der FTNVE verbunden ist, und wobei diese vier Komponenten nach einem Power-up der FTNVE mittels *interner Synchronisationsnachrichten* eine fehlertolerante globale Zeit aufbauen und diese während des Betriebs der FTNVE erhalten, und wobei die vier Komponenten mittels *periodischer externer Synchronisationsnachrichten* die globale Zeit an die externen Computer liefern, und wobei die externen Computer jeweils ihren lokalen Uhrenstand auf die empfangene globale Zeit stellen, und wobei zu *a priori* in Zeittabellen festgelegten periodischen Sendezeitpunkten, ausgedrückt in der globalen Zeit, jeder externe Sender einer zeitgesteuerten Nachricht zwei Nachrichtenkopien der zu sendenden Nachricht über zwei unterschiedliche

Kommunikationskanäle an zwei unterschiedliche Komponenten der FTNVE übermittelt, und wobei diese beiden Nachrichtenkopien innerhalb der FTNVE über zwei unabhängige

Kommunikationsrouten an jene beiden Komponenten der FTNVE geliefert werden, die über Kommunikationskanäle mit einem externen Empfänger der Nachricht verbunden sind, und wobei der externe Empfänger die Gültigkeit einer eintreffenden Nachrichtenkopie überprüft und jene gültige Nachrichtenkopie übernimmt, die zuerst eingetroffen ist und die zweite, später eintreffende Nachrichtenkopie verwirft.

Mit einem solchen Verfahren wird auch der fehlertolerante Transport von zeitgesteuerten Nachrichten ermöglicht.

Weiters wird die oben genannte Aufgabe mit einer fehlertoleranten Nachrichtenverteilereinheit, FTNVE, die zum Durchführen eines vorstehend beschriebenen Verfahrens bzw. zur Verwendung in einem solchen Verfahren eingerichtet ist, gelöst, wobei erfindungsgemäß die FTNVE vier *Komponenten* umfasst, eine erste Komponente, eine zweite Komponente, eine dritte Komponente und eine vierte Komponente, wobei jede der vier Komponenten über zwei oder zumindest zwei unabhängige *Kommunikationsrouten* mit den anderen drei Komponenten der FTNVE verbunden ist, und wobei diese vier Komponenten nach einem Power-up der FTNVE mittels *interner Synchronisationsnachrichten* eine fehlertolerante globale Zeit aufbauen und diese während des Betriebs der FTNVE erhalten, und wobei die vier Komponenten dazu eingerichtet sind, mittels *periodischer externer Synchronisationsnachrichten* die globale Zeit an die externen Computer liefern, sodass die externen Computer jeweils ihren lokalen Uhrenstand auf die empfangene globale Zeit stellen, und wobei wenn zu *a priori* in Zeittabellen festgelegten periodischen Sendezeitpunkten, ausgedrückt in der globalen Zeit, jeder externe Sender einer zeitgesteuerten Nachricht zwei Nachrichtenkopien der zu sendenden Nachricht über zwei unterschiedliche Kommunikationskanäle an zwei unterschiedliche Komponenten der FTNVE übermittelt, die FTNVE dazu eingerichtet ist, diese beiden Nachrichtenkopien innerhalb der FTNVE über zwei unabhängige Kommunikationsrouten an jene beiden Komponenten der FTNVE zu liefern, die über Kommunikationskanäle mit einem externen Empfänger der Nachricht verbunden sind.

Außerdem wird die eingangs genannte Aufgabe mit einem verteilten Echtzeitcomputersystem gelöst, welches *externe Computer* und vorstehend beschriebene fehlertolerante Nachrichtenverteilereinheit, FTNVE, umfasst.

Die FTNVE ist erfindungsgemäß dazu eingerichtet, eine fehlertolerante globale Zeit aufbauen und erhalten.

Die FTNVE beinhaltet zumindest vier unabhängige Komponenten, die mit redundanten Kommunikationskanälen zur Übertragung von Nachrichten untereinander und mit den externen Computern des verteilten Echtzeitcomputersystems verbunden sind.

Jede dieser Komponenten bildet eine Fault-Containment Unit, FCU, [Kopll, S. 136]. Ein Ausfall einer Komponente, d.h. einer FCU, ist von der FTNVE zu tolerieren.

Eine, vorzugsweise alle Komponenten der FTNVE beinhalten einen Computer, einen Oszillator, einen Tick-Zähler, sowie Software zur Synchronisation des (lokalen) Tick-Zählers und zur Vermittlung von Nachrichten. Die periodischen Zeitpunkte zur Vermittlung von zeitgesteuerten Nachrichten werden a priori erstellten Zeittabellen innerhalb der Komponente entnommen.

Jeder externe Computer des verteilten Echtzeitcomputersystems muss mit mindestens zwei unabhängigen Kommunikationskanälen mit zwei unabhängigen internen Komponenten der FTNVE verbunden sein, um den Ausfall eines Kommunikationskanals oder einer Komponente tolerieren zu können. Innerhalb der FTNVE muss jeder Nachrichtenaustausch zwischen zwei Komponenten der FTNVE über zwei unabhängige Kommunikationsrouten erfolgen.

Unmittelbar nach Power-up wird in der Start-up Phase der FTNVE mittels eines zentralen Master Algorithmus eine synchronisierte Zeit innerhalb der mindestens vier Komponenten der FTNVE aufgebaut. Diese interne Synchronisation wird in der Folge durch einen verteilten fehlertoleranten Synchronisationsalgorithmus [z.B. den FTA Algorithmus, siehe Kop11, S. 69] aufrechterhalten.

Nach dem Ende der Start-up Phase werden zu a priori festgelegten wiederkehrenden Zeitpunkten von der FTNVE externe Synchronisationsnachrichten an die externen Computer des verteilten Echtzeitcomputersystems gesendet. Diese externen Synchronisationsnachrichten haben die fail-silent Eigenschaft, d.h., sie sind entweder richtig oder erkennbar falsch. Ein externer Computer stellt seine lokale Uhr auf den Zeitpunkt ein, der in der ersten eintreffenden gültigen externen Synchronisationsnachricht enthalten ist.

Zu a priori festgelegten periodischen Zeitpunkten, die in einer Zeittabelle eines externen Senders enthalten sind, sendet ein externer Computer gleichzeitig zwei Kopien einer Nachricht zu zwei unabhängigen Komponenten der FTNVE. Diese beiden Kopien werden auf zwei unterschiedlichen Kommunikationsrouten innerhalbe FTNVE zu jenen beiden unabhängigen Komponenten der FTNVE übertragen, die mit dem Empfänger der Nachricht verbunden sind. Der Empfänger übernimmt die zuerst eintreffende gültige Kopie der Nachricht und verwirft die später eintreffende zweite Kopie.

### Begriffsdefinitionen:

**externer Computer:** ein Computer des verteilten Echtzeitcomputersystems, der entweder Nachrichten zur FTNVE sendet (externer Sender) oder Nachrichten von der FTNVE empfängt (externer Empfänger).

**externe Synchronisationsnachricht:** Eine Synchronisationsnachricht zur Synchronisation der Uhren der externen Empfänger. Eine externe Synchronisationsnachricht ist fail-silent, d.h. sie ist entweder richtig oder wird als unrichtig erkannt. Die Fehlererkennung einer unrichtigen Synchronisationsnachricht kann vorzugsweise durch die Überprüfung einer elektronischen Signatur, die in der externen Synchronisationsnachricht enthalten ist, erfolgen.

**externer Empfangszeitpunkt**: Der a priori festgelegte Zeitpunkt, zu dem eine korrekte externe Synchronisationsnachricht beim externen Empfänger eintrifft und der in der Payload der externen Synchronisationsnachricht enthalten ist.

**externer Synchronisationszeitpunkt:** ein periodisch wiederkehrender Zeitpunkt, der im Rahmen des Systementwurfs festgelegt wird und zu dem eine externe Synchronisationsnachricht von einer Komponente der FTNVE gesendet wird. Die externe Synchronisationsnachricht wird genau nur dieser einen internen Komponente zugesendet, wobei letztere außerdem von keiner anderen internen Komponente des Zeitservers externe Synchronisationsnachrichten erhält. Die (interne) Übertragung der externen Synchronisationsnachrichten zwischen zwei Komponenten des Zeitservers erfolgt *direkt* über eine Kommunikationsleitung, welche die beiden Komponenten direkt, ohne den Umweg über andere Komponenten verbindet.

**fehlertolerante Nachrichten-Verteilereinheit (FTNVE):** Eine Nachrichtenverteilereinheit, bestehend aus mehreren Fault-Containment Units (FCU) [siehe Kop11, S. 136], wobei im Entwurf sichergestellt wird, dass auch nach Ausfall einer beliebigen FCU der FTNVE die rechtzeitige Verteilung der Nachrichten vollzogen werden kann.

**fehlertoleranten Uhrensynchronisations-Algorithmus:** Ein Algorithmus zur fehlertoleranten Synchronisation der Uhren in einem Verteilten Computersystem [Kopll, S.69].

**festgehaltenen Empfangszeitpunkt:** Der Zeitpunkt des Empfangs einer externen Synchronisationsnachricht, gemessen mit der Uhr des externen Empfängers. Die Genauigkeit des festgehaltenen Empfangszeitpunkts kann durch einen Hardwaremechanismus verbessert werden.

**Globale Zeit:** Die von der FTNVE übermittelte Zeit, deren entsprechende Ticks bei allen externen Empfänger innerhalb einer definierten Präzision liegen (siehe [Kopll, S. 55] zum Begriff der Präzision).

**GPS Empfänger (Receiver):** Eine elektronische Baueinheit, die die Satellitensignale von den GPS Satelliten empfängt und ein Zeitsignal entsprechend ausgedrückt in SI Sekunden an den Zeitserver, insbesondere an die an den GPS Empfänger angeschlossenen Komponenten des Zeitservers übergibt [Dan97].

**GPS Zeit:** Ein weltweites mit der SI Sekunde synchronisiertes Zeitsignal, das vom GPS System ausgestrahlt wird und von einem GPS Empfänger empfangen werden kann [Dan97]. **Gültigkeit einer Nachricht:** Eine Nachricht ist gültig, wenn die Überprüfung der Daten einer Nachricht mittels des in der Nachricht enthaltenen CRC Feld keinen Fehler findet.

**interne Synchronisationsnachricht:** Eine Synchronisationsnachricht zur internen Synchronisation der Tick-Zähler der Komponenten innerhalb der FNTVE. Interne Synchronisationsnachrichten werden zwischen den internen Komponenten der FNTVE übertragen.

**interner Synchronisationszeitpunkt:** ein periodisch wiederkehrender Zeitpunkt, der im Rahmen des Systementwurfs festgelegt wird und zu dem eine interne Synchronisationsnachricht gesendet wird.

**Kommunikationskanal:** Ein Übertragungsweg für Nachrichten von einem Sender zu einem oder mehreren Empfängern.

**Kommunikationskontroller:** die Baueinheit innerhalb eines Computers, welche die Verbindung zwischen einem externen Kommunikationskanal und dem Speicher des Computers herstellt und die Abwicklung des Kommunikationsprotokolls vornimmt.

**Kommunikationsroute:** Eine Verkettung von einem oder mehreren Kommunikationskanälen von einem Sender über zwischenliegende Komponenten zu einem oder mehreren Empfängern.

**Komponente:** Ein Computer der FTNVE mit einem Oszillator, einen Tick-Zähler und der dazugehörigen Software.

**Nachricht:** Eine Datenstruktur, die mindestens drei Felder, nämlich den Header, die Payload und das CRC Feld, enthält, wobei der Header angibt, wohin die Nachricht zu senden ist, die Payload den Bitvektor der zu sendenden Daten enthält und das CRC Feld redundante Daten enthält, mittels derer die Gültigkeit der Daten der Nachricht überprüft werden kann.

**Physical proximity fault:** Eine Fehlerursache, die alle Objekte, die in einer benachbarten physikalischen Umgebung angeordnet sind, betrifft.

**Semantische Gültigkeit einer Nachricht:** Eine Nachricht ist semantisch gültig, wenn sie gültig ist und wenn die in der Nachricht enthaltene elektronische Signatur des Senders die Authentizität und Integrität der übertragenen Daten belegt.

**Start-up Nachricht:** Eine Nachricht innerhalb der FNTVE zur internen Uhrensynchronisation, die in der Start-up Phase gesendet wird.

**Start-up Phase:** Das Zeitintervall unmittelbar nach dem Power-up der internen Komponenten der FTNVE. Während der Start-up Phase werden die Tick-Zähler der Komponenten innerhalb der FTNVE mittels eines zentralen Master Algorithmus [Kopll, S. 68] synchronisiert.

**unabhängige Kommunikationskontroller der FTNVE:** zwei Kommunikationskontroller des Zeitservers sind unabhängig, wenn sie auf unterschiedlichen Komponenten der FTNVE angeordnet sind.

**Zeitstempel:** Eine Datenstruktur, die den Zeitpunkt des Auftretens eines signifikanten Ereignisses, gemessen mit der Uhr des Beobachters des Ereignisses, festhält.

**Zeittabelle:** Eine Datenstruktur in der die periodischen Zeitpunkte enthalten sind, zu denen bestimmte Aktionen, z.B. das Senden einer bestimmten Nachricht in einem zeitgesteuerten System, enthalten sind. Die Zeittabellen werden a priori, d.h., vor der Inanspruchnahme einer Dienstleistung, z.B. während des Systementwurfs, erstellt.

Vorteilhafte Ausgestaltungen des erfindungsgemäßen Verfahrens, der erfindungsgemäßen FTNVE und des erfindungsgemäßen verteilten Echtzeitcomputersystems sind im Folgenden beschrieben:
- Zum Aufbau und zur Aufrechterhaltung der fehlertoleranten globalen Zeit kann vorgesehen sein, dass jede der vier Komponenten einen Oszillator und einen lokalen Tick-Zähler, z.B. einen internen Computer mit einem Oszillator und einem lokalen Tick-Zähler, umfasst, wobei nach einem Power-up der lokale Tick-Zähler jeder Komponente mit einem identischen Wert, vorzugsweise dem Wert Null initialisiert wird, wobei der Wert des lokalen Tick-Zählers einer Komponente in jeder Periode des Oszillators der Komponente um einen festen Wert, vorzugsweise um den Wert 1, erhöht wird, wobei in einer Start-up Phase *nach Power-up* des Zeitservers eine der vier Komponenten, z.B. die erste Komponente, eine *Start-up Nachricht* mit einem aktuellen Stand ihres lokalen Tick-Zählers zum Zeitpunkt des Sendens der *Start-up Nachricht* an die anderen Komponenten sendet, und wobei jeder Empfänger der Start-up Nachricht seinen lokalen Tick-Zähler auf den in der Start-up Nachricht enthaltenen Wert, korrigiert um eine *a priori* bekannte Transportverzögerung der Start-up Nachricht, setzt, und wobei zu *a priori* festgelegten periodischen, *internen Synchronisationszeitpunkten* jede der vier Komponenten eine *interne Synchronisationsnachricht,* die den Stand ihres lokalen Tick-Zählers zum Zeitpunkt des Sendens der *internen Synchronisationsnachricht* enthält, gleichzeitig an die anderen drei Komponenten sendet, und wobei jeder Empfänger einer *internen Synchronisationsnachricht* den Stand seines lokalen Tick-Zählers zum Empfangszeitpunkt der *internen Synchronisationsnachricht* festhält, und die Zeit-Differenz zwischen dem in der *internen Synchronisationsnachricht* enthaltenen Sendezeitpunkt und dem festgehaltenen Empfangszeitpunkt der *internen Synchronisationsnachricht,* korrigiert um die *a priori* bekannte Verzögerung der *internen Synchronisationsnachricht,* ermittelt, und wobei jeder interne Computer einer Komponente aus diesen Zeitdifferenzen entsprechend einem fehlertoleranten Uhrensynchronisations-Algorithmus einen Korrekturterm für den in seiner Komponente enthaltenen Tick-Zähler ermittelt und den Stand des lokalen Tick-Zählers um diesen Korrekturterm korrigiert, und wobei zwei der vier Komponenten, z.B. die erste Komponente und die dritte Komponente, je eine *externe Synchronisationsnachricht,* die einen *a priori* festgelegten *externen Empfangszeitpunkt* dieser *externen Synchronisationsnachricht* enthält, bilden, wobei beide externen Synchronisationsnachrichten denselben externen Empfangszeitpunkt enthalten, und diese *externen* Synchronisationsnachrichten gleichzeitig zu *a priori* festgelegten periodischen *externen Synchronisationszeitpunkten* jeweils über einen Kommunikationskanal direkt an eine der anderen Komponenten, aber nicht an dieselbe der beiden anderen Komponenten, senden, z.B. die erste Komponente an die zweite Komponente und die dritte Komponente an die vierte Komponenten, und wobei jede der Komponenten des Zeitservers, an welche eine externe Synchronisationsnachricht gesendet wurde, überprüft, ob der in der empfangenen *externen Synchronisationsnachricht* enthaltene *externe Empfangszeitpunkt* gemessen zum Stand ihres lokalen Tick-Zählers zum Zeitpunkt des Empfangs der externen Synchronisationsnachricht so gesetzt ist, wie es durch eine a *priori Planung* des externen Synchronisationszeitpunktes und des externen Empfangszeitpunktes vorgeben ist, und falls dies nicht der Fall ist, die *externe Synchronisationsnachricht* verwirft, und falls dies der Fall ist, die externe Synchronisationsnachricht über einen externen Kommunikationskontroller der Komponente an einen externen Empfänger zu einem, insbesondere a priori festgelegten Zeitpunkt, der sicher stellt, dass die *externe Synchronisationsnachricht* zu dem in der *externen Synchronisationsnachricht* enthaltenen *externen Empfangszeitpunkt* beim externen Empfänger eintrifft, weiterleitet, und wobei jeder externe Empfänger den Zeitpunkt des Empfangs der ersten eintreffenden *externen Synchronisationsnachricht* mit seiner lokalen Uhr festhält und anschließend den Stand seiner lokalen Uhr um die Differenz zwischen dem festgehaltenen Zeitpunkt des Empfangs der *externen Synchronisationsnachricht* und dem in der *externen Synchronisationsnachricht* enthaltenen externen Empfangszeitpunkt korrigiert.

- Es kann vorgesehen sein, dass Komponenten, welche eine *externe Synchronisationsnachricht erzeugen,* diese externe Synchronisationsnachricht mit einer elektronischen Unterschrift versehen und der Empfänger dieser externen Synchronisationsnachricht auf Basis dieser elektronischen Unterschrift überprüft, ob die Nachricht gültig ist und die Nachricht verwirft, wenn sie ungültig ist.
- Vorzugsweise entspricht der zeitliche Abstand zwischen zwei externen Synchronisationsnachrichten einer Potenz der SI-Sekunde.
- Externe Synchronisationsnachrichten können jeweils ein Datenfeld umfassen, in dem Daten über den internen Zustand des Zeitservers enthalten sind.
- Eine zeitgesteuerte Nachricht kann von ihrem externen Sender mit einer elektronischen Signatur versehen werden und der externe Empfänger kann anhand dieser Signatur überprüfen, ob die zeitgesteuerte Nachricht *semantisch gültig* ist, und wobei der externe Empfänger *semantisch ungültige* Nachrichten verwirft.
- Die FTNVE kann zumindest einen GPS Empfänger umfassen und die *periodischen externen Synchronisationsnachrichten* können die GPS Zeit verteilen.
- Die FTNVE kann in zwei physikalisch getrennte Subsysteme unterteilt sein.
- Die beiden Subsysteme sind vorzugsweise im physikalischen Raum derart voneinander getrennt, beispielsweise so weit voneinander entfernt angeordnet, dass eine physikalische Fehlerursache nur eines der beiden Subsysteme treffen kann.
- Vorzugsweise verfügen die beiden Subsysteme über je eine unabhängige Stromversorgung.
- In jedem der getrennten Subsysteme kann ein GPS Empfänger enthalten oder jedem Subsystem ein eigener GPS Empfänger zugeordnet sein.
- Die *Komponenten* der FTNVE können mit einer Hardwareeinrichtung ausgestattet sein, die dazu eingerichtet ist, den exakten Zeitpunkt des Eintreffens einer Nachricht in einem Zeitstempel festzuhalten.
- Die *externen Computer* des verteilten Echtzeitcomputersystems sind vorzugsweise mit einer Hardwareeinrichtung ausgestattet, die dazu eingerichtet ist, den exakten Zeitpunkt des Eintreffens einer Nachricht in einem Zeitstempel festzuhalten.
- Jeder externe Computer ist mit der FNTVE vorzugsweise über zwei Kommunikationskanäle verbunden, wobei jeder Kommunikationskanal mit einer anderen Komponente der FNTVE verbunden ist, und wobei die externen Computer dazu eingerichtet sind, jeweils zwei Kopien einer externen Nachricht über die jeweils zwei unabhängigen Kommunikationskanäle, die an den jeweils zwei unterschiedlichen Komponenten der FTNVE enden, an die FTNVE zu senden, und wobei die FTNVE dazu eingerichtet ist, diese beiden Kopien an über zwei unabhängige Kommunikationskanäle an einen andere externen Computer zu übertragen.

Im Folgenden ist die Erfindung an Hand der Zeichnung näher erörtert. In dieser zeigt
Fig. 1 eine FTNVE mit vier internen Komponenten und sechs externen Computers eines verteilten Echtzeitcomputersystems,
Fig.2 eine FTNVE mit einem integrierten GPS Empfänger, und
Fig.3 eine FTNVE, die aus zwei mechanisch getrennten Baueinheiten besteht.

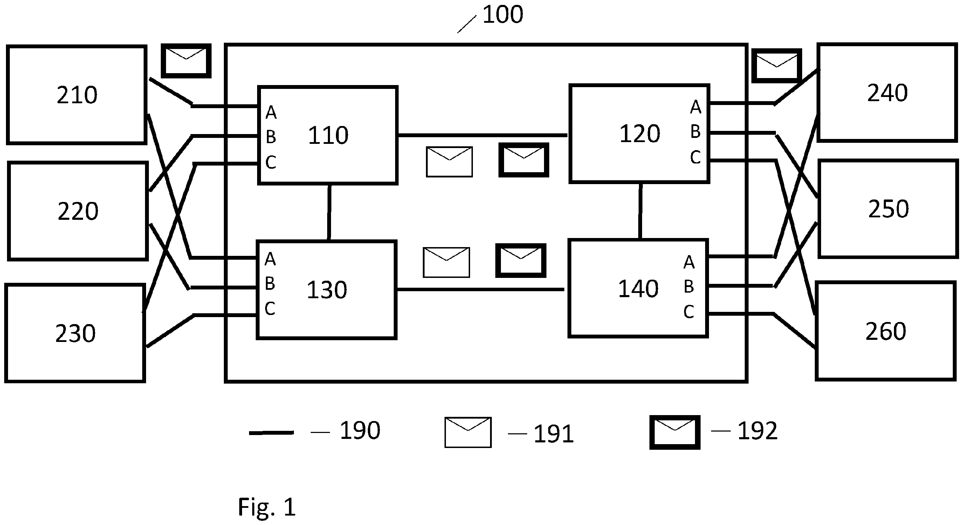

**Figur 1** zeigt einen FTNVE 100 umfassend vier Komponenten 110, 120, 130, 140 (eine erste Komponente 110, eine zweite Komponente 120, eine dritte Komponente 130 und eine vierte Komponente 140), wobei die erste Komponente 110 mit der zweiten und der dritten Komponente 120, 130, die zweite Komponente 120 mit der ersten und der vierten Komponente 110, 140, die dritte Komponente 130 mit der ersten und der vierten Komponente 110, 140 und entsprechend die vierte Komponente 140 mit der zweiten und der dritten Komponente 120, 130 über je einen bi-direktionalen Kommunikationskanal 190 zur Übertragung von Nachrichten verbunden ist.

Jede der vier Komponenten 110, 120, 130, 140 verfügt über mindestens fünf Kommunikationskontroller zum Senden und Empfang von Nachrichten, zwei interne Kommunikationskontroller und mindestens drei externe Kommunikationskontroller A, B, C. Über die externen Kommunikationskontroller ist die FNTVE 100 mit externen Computern des Echtzeitcomputersystems, im konkreten Fall mit sechs Computern 210 - 260 verbunden.

Es wird zwischen zwei Arten von Nachrichten unterscheiden, den internen Nachrichten 191, die innerhalb der FTNVE 100 vermittelt werden, und den externen Nachrichten 192, die sowohl innerhalb der FTNVE 100 als auch zwischen einer Komponente der FTNVE und einem externen Computer transportiert werden können. Mit den internen Nachrichten 191 werden die Uhren der Komponenten der FTNVE 100 synchronisiert.

### Erstellen einer fehlertoleranten globalen Zeit

Vorzugsweise verfügt jede der vier Komponenten 110, 120, 130, 140 über einen *internen Computer* mit einem *Oszillator* und einem *lokalen Tick-Zähler,* sowie einer Software, die einen Uhrensynchronisationsalgorithmus ausführt, und nach dem Einschalten einer Komponente, dem *Power-up,* wird vorzugsweise eine Initialisierungsroutine angestoßen, die den lokalen Tick-Zähler jeder Komponente mit dem Wert Null initialisiert, wobei der Wert des lokalen Tick-Zählers pro Periode des Oszillators um 1 erhöht wird.

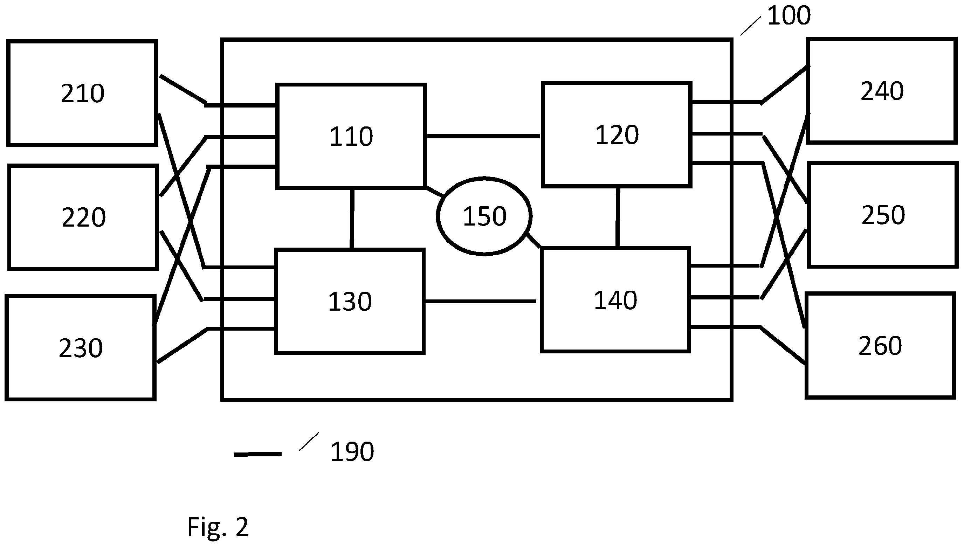

Nach dem Power-up der FTNVE 100 bzw. der Komponenten 110, 120, 130, 140 beginnt die Start-up Phase der FTNVE 100. Während der Start-up Phase übernimmt eine ausgezeichnete Komponente der FTNVE, z.B. die erste Komponente 110, die Rolle eines Time-Masters. Der Time Master sendet eine interne Start-up Nachricht 191 mit dem Inhalt seines lokalen Tick-zählers (oder mit dem Inhalt der GPS Zeit vom GPS Sensor 150 - siehe **Figur 2**) gleichzeitig an die drei anderen Komponenten 120, 130, 140. Jeder Empfänger der Start-up Nachricht korrigiert den in der Start-up Nachricht enthaltenen Tick-Zähler um die a priori bekannte Transportverzögerung der Start-up Nachricht und schreibt diesen korrigierten Wert in seinen Tick-Zähler. Zu diesem Zeitpunkt sind die lokalen Tick-Zähler aller Uhren synchronisiert. Der Zeitpunkt des Eintreffens einer einlaufenden Nachricht kann durch den Einsatz von unterstützenden Hardwaremechanismen in einem Zeitstempel genau festgehalten werden.

Vor der Inanspruchnahme eines Nachrichtentransports-d.h. a priori- werden periodische interne Synchronisationszeitpunkte festgelegt, zu denen die lokalen Tick-Zähler der Komponenten korrigiert werden, um die im Zeitintervall zwischen zwei Synchronisationszeitpunkten aufgetretenen Abweichungen der Uhren zu korrigieren.

Jede der vier Komponenten sendet zu jedem internen Synchronisationszeitpunkt eine interne Synchronisationsnachricht 191 an die drei anderen Komponenten der FTNVE 100. Eine interne Synchronisationsnachricht 191 enthält den Stand des lokalen Tick-Zählers des Senders zum Zeitpunkt des Sendens in der Payload.

Jeder Empfänger einer internen Synchronisationsnachricht 191 hält den Stand seines lokalen Tick-Zählers zum Empfangszeitpunkt der internen Synchronisationsnachricht 191 fest (vorzugsweise durch einen Hardwaremechanismus im Kommunikationskontroller, der in einem Zeitstempel den Empfangszeitpunkt der eintreffenden Nachricht festhält).

Jede Komponente ermittelt die Zeitdifferenzen zwischen den in den internen Synchronisationsnachrichten enthaltenen Sendezeitpunkten und den festgehaltenen Empfangszeitpunkten, korrigiert diese Zeitdifferenz um die a priori bekannte Verzögerungen der internen Synchronisationsnachricht, und übergibt diese Zeitdifferenzen einem fehlertoleranten Uhrensynchronisations-Algorithmus. In **Figur 1** stehen somit dem Algorithmus in Komponente 110 vier Zeitdifferenzen zur Verfügung, drei von den Nachrichten der Komponente 120, 130, 140, sowie die Zeitdifferenz Null vom Tick-Zähler der Komponente 110. (Die Komponente 100 nimmt an, dass sie richtig liegt). Fehlertolerante Uhrensynchronisations-Algorithmen sind in der Fachliteratur ausführlich beschrieben [z.B. Kop11, S. 69]. Ein fehlertoleranter Uhrensynchronisations-Algorithmus wird in jeder Komponente ausgeführt und ermittelt aus der Gesamtheit der ermittelten Zeitdifferenzen aller Uhren einen Korrekturwert für die eigene Uhr. Der Tick-Zähler der eigenen Uhr wird mit diesem Korrekturwert korrigiert. Der Begriff der Präzision eines Ensembles beschreibt die Genauigkeit der internen Synchronisation [Kopll, S. 55].

Im Rahmen des Systementwurfs werden periodische externe Synchronisationszeitpunkte, und entsprechende Empfangszeitpunkte einer externen Synchronisationsnachricht festgelegt und in einer Zeittabelle jeder Komponente gespeichert. Eine externe Synchronisationsnachricht enthält in ihrer Payload den geplanten Empfangszeitpunkt dieser Nachricht bei dem externen Empfänger und vorzugsweise eine elektronische Signatur des Senders. Eine bei einem Computer eintreffende externe Synchronisationsnachricht ist semantisch gültig, wenn der Inhalt der Nachricht mit der in der Nachricht enthaltenen Signatur übereinstimmt. Es wird angenommen, dass eine elektronische Signatur des Senders nicht gefälscht werden kann.

Eine externe Synchronisationsnachricht kann in ihrer Payload auch Angaben über den inneren Zustand der FTNVE 100 zu Diagnosezwecken enthalten, z.B. Angaben über die Feldstärke des GPS Signals vom GPS Empfänger 150.

Die periodischen Synchronisationszeitpunkte der externen Synchronisationsnachrichten, die in der Zeittabelle jeder Komponente gespeichert sind, sollen vorzugsweise so gewählt werden, dass der zeitliche Abstand zwischen zwei Synchronisationsnachrichten einer (negativen) Potenz der SI Sekunde entspricht. Diese zeitliche Differenz kann von der GPS Zeit, die als Basis der Zeitzählung die SI Sekunde verwendet, abgeleitet werden. Wenn die externen Synchronisationsnachrichten mit der GPS Zeit synchronisiert sind, so ist die Zeitbasis des verteilten Computersystems weltweit mit allen anderen Computern, die auf der GPS Zeit aufbauen, synchronisiert.

Die Komponente 110 der **Figur 1** sendet eine für Computer 240, 250, 260 bestimmte externe Synchronisationsnachricht an die Komponente 120. Die Komponente 120 überprüft die Richtigkeit des in der externen Synchronisationsnachricht enthaltenen Empfangszeitpunkts. Dieser Empfangszeitpunkt ist richtig, wenn der Stand der Uhr der Komponente 120 zum Zeitpunkt des Empfangs der externen Synchronisationsnachricht innerhalb eines a priori festgelegten Intervalls vor dem Empfangszeitpunkt, welcher in der externen Synchronisationsnachricht enthaltenen ist, liegt. Ist die externe Synchronisationsnachricht nicht richtig, so wird die Nachricht verworfen. Anderenfalls wird die Nachricht von der Komponente 120 über die Kommunikationskontroller 120-A, 120-B, 120-C zu den Computern 240, 250, 260 zu jenem Zeitpunkt gesendet, der sicher stellt, dass die Nachricht zu dem in der externen Synchronisationsnachricht enthaltenen Empfangszeitpunkt bei den Computern 240, 250, 260 eintrifft.

Analog sendet die Komponente 130 der **Figur 1** eine für die Computer 240, 250, 260 bestimmte externe Synchronisationsnachricht an die Komponente 140. Die Komponente 140 überprüft die Richtigkeit des in der externen Synchronisationsnachricht enthaltenen Empfangszeitpunkts. Dieser Empfangszeitpunkt ist richtig, wenn der Stand der Uhr der Komponente 140 zum Zeitpunkt des Empfangs der externen Synchronisationsnachricht innerhalb eines a priori festgelegten Intervalls vor dem Empfangszeitpunkt, welcher in der externen Synchronisationsnachricht enthaltenen ist, liegt. Ist die externe Synchronisationsnachricht nicht richtig, so wird die Nachricht verworfen. Anderenfalls wird die Nachricht von der Komponente 140 über die Kommunikationskontroller 140-A, 140-B, 140-C zu den Computern 240, 250, 260 zu jenem Zeitpunkt gesendet, der sicher stellt, dass die Nachricht zu dem in der externen Synchronisationsnachricht enthaltenen Empfangszeitpunkt bei den Computern 240, 250, 260 eintrifft.

Falls kein Fehler vorliegt, so treffen bei jedem der Computern 240, 250, 260 nahezu gleichzeitig (d.h. innerhalb der Präzision, siehe [Kopll, S. 55]) zwei externe Synchronisationsnachrichten ein, eine von der Komponente 120 und die Zweite von der Komponente 140. Ein externer Empfänger verwendet die zuerst eintreffende externe Synchronisationsnachricht zur Korrektur seiner Uhr und verwirft die später eintreffende zweite externe Synchronisationsnachricht.

Das vorstehend beschriebene Verfahren zur externen Synchronisation der Uhren wird genauso von den Komponenten 120, 140 in Bezug auf die externen Computer 210, 220, 230 durchgeführt.

### Fehlertolerante Vermittlung von zeitgesteuerten Echtzeitnachrichten

Sobald alle Uhren der externen Computer auf die vorab beschriebene Art synchronisiert wurden, kann mit der fehlertoleranten Vermittlung von zeitgesteuerten Echtzeitnachrichten begonnen werden.

Die FTNVE 100 der **Figur 1** ist mit jedem der sechs externen Computer 210, 220, 230, 240, 250, 260 des verteilten Echtzeitcomputersystems über jeweils zwei Kommunikationskanäle verbunden, wobei zwei Kopien einer externen Nachricht 192 über jeweils zwei unabhängige Kommunikationskanäle, die an unterschiedlichen Komponenten der FTNVE 100 senden, an einen externen Computer übertragen werden. Z.B. ist der externe Computer 210 mit der Komponente 110 über deren Kommunikationskontroller 110-A und mit der Komponente 130 über deren Kommunikationskontroller 130-A verbunden.

Es wird nun der Fall betrachtet, dass der externe Sender 210 zu einem a priori festgelegten periodischen Zeitpunkt über die FTNVE 100 die zwei Kopien einer zeitgesteuerten Nachricht an den externen Empfänger 260 sendet. Die erste Kopie wird vom externen Sender 210 an den Kommunikationskontroller 110-A und von dort an den Kommunikationskontroller 120-C und weiter an den externen Empfänger 260 gesendet. Die zweite Kopie wird vom externen Sender 210 über eine unabhängige Kommunikationsroute an den Kommunikationskontroller 130-A und von dort an den Kommunikationskontroller 140-C und weiter an den externen Empfänger 260 gesendet. Beim externen Empfänger 260 treffen nahezu gleichzeitig (d.h. innerhalb der Präzision, siehe [Kopll, S. 56]) die zwei Kopien der Nachricht ein. Der externe Empfänger 260 überprüft die Kopien auf ihre Gültigkeit und übernimmt die zuerst eintreffende gültige Kopie der Nachricht und verwirft die später eintreffende zweite Kopie.

Jede Kopie der Nachricht kann vorzugsweise neben den zu übertragenden Daten eine digitale Signatur des Senders 210 enthalten. Der Empfänger der Nachricht 260 überprüft den Inhalt der Nachricht anhand der in der Nachricht enthaltenen Signatur und übernimmt eine Nachricht nur, wenn sie semantisch gültig ist.

Die beschriebene Architektur der FTNVE 100 stellt sicher, dass der Nachrichtenaustausch zwischen dem externen Sender 110 und dem externen Empfänger 260 auch aufrechterhalten bleibt, wenn eine der internen Komponente 110, 120, 130, 140 der FTNVE 100 oder einer der Kommunikationskanäle 190 ausfällt.

**Figur 2** zeigt die FNTVE 100 aus **Figur 1****,** welche zusätzlich einen GPS Empfänger 150 umfasst, welcher mit zumindest einer der Komponenten der FNTVE 100, im konkreten Beispiel mit den beiden Komponenten 110, 140 verbunden ist. Der GPS Empfänger kann zur Synchronisation der globalen Zeit mit der GPS Zeit verwendet werden. Das GPS Signal des Global Positioning Systems enthält ein weltweit synchronisiertes Zeitsignal mit einer Präzision von besser als 100 nsec. Mit diesem Signal kann die globale Zeit der externen Empfänger weltweit synchronisiert werden.

Es ist vorteilhaft, wenn die Komponenten des FTNVE, die das Zeitsignal vom GPS Empfänger 150 übernehmen, dieses Zeitsignal auf Plausibilität überprüfen. Z.B. kann die Dynamik der Feldstärke der eintreffenden GPS Signale überwacht werden, oder es kann eine sprunghafte Änderung der angebotenen Zeit festgestellt werden, um eine Intrusion zu erkennen.

Bei einer Ausführungsform wie in **Figur 1** oder **Figur 2** dargestellt kann es weiters auch möglich sein, dass zusätzlich zu den dargestellten Verbindungen 190 zwischen den vier Komponenten auch noch jeweils ein bi-direktionaler Kommunikationskanal zwischen der ersten und der vierten Komponente und der zweiten und der dritten Komponente vorgesehen ist.

Wenn alle Komponenten der FTNVE in einer benachbarten physikalischen Umgebung angeordnet sind, so kann ein Physical-proximity Fault mehr als eine Komponente der FTNVE beschädigen und so zum Totalausfall der Kommunikation führen.

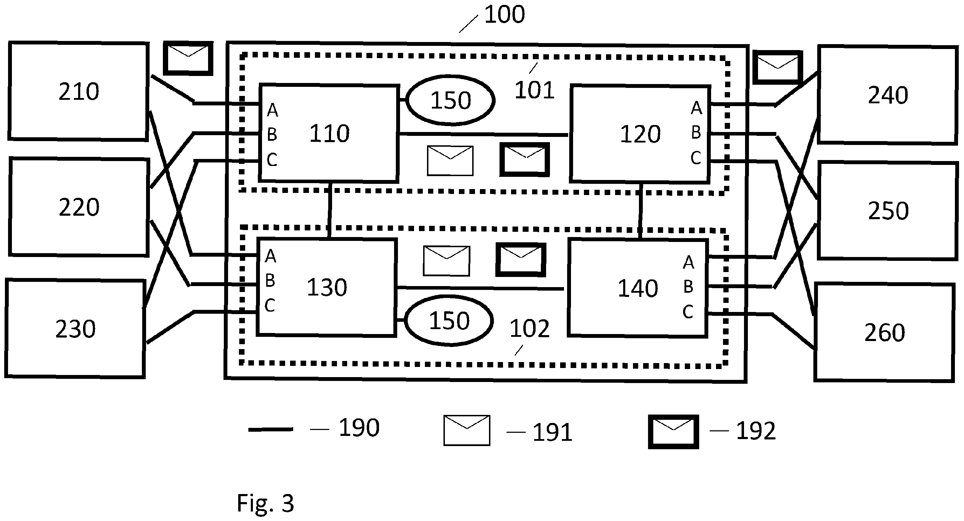

Um diese Situation zu beherrschen, kann die FTNVE in zwei Baueinheiten 101, 102 zerlegt werden, wie dies in **Figur 3** gezeigt ist, wobei die beiden Baueinheiten 101, 102 vorzugsweise an unterschiedlichen physikalischen Orten untergebracht sind. Ein Totalausfall der Kommunikation kann dann nur stattfinden, wenn beide Baueinheiten 101, 102 zerstört werden.

Wenn jede der beiden Baueinheiten 101, 102 der **Figur 3** eine unabhängige Stromversorgung enthält, so kann die Kommunikation innerhalb des Echtzeitsystems auch nach Ausfall einer der beiden Baueinheit aufrechterhalten werden.

Wenn jede der beiden Baueinheiten 101, 102 der **Figur 3** einen eigenen GPS Empfänger enthält, so kann auch die GPS Synchronisation bei Ausfall einer Baueinheit aufrechterhalten werden.

Es ist festzuhalten, dass nach Zerstörung einer der beiden Baueinheiten 101, 102 der FTNVE 100 die Fehlertoleranz der Uhrensynchronisation und der Fehlertoleranz bei der Nachrichtenübertragung verloren geht.

### Zitierte Literatur:

[Dan97] Dana, P.H. Global Positioning System (GPS) Time Dissemination for Real-Time Applications. Real-Time Systems. Vol 12. No. 1., pp. 9-40. 1997

[Kop11] Kopetz, H. Real-Time Systems, Design Principles for Distributed Embedded Applications. Springer Verlag. 2011.

## Patentansprüche

1. Verfahren zur Bereitstellung einer *fehlertoleranten globalen Zeit* und zum *fehlertoleranten Transport von zeitgesteuerten Nachrichten* in einem verteilten Echtzeitcomputersystem, welches *externe Computer* (**210, 220, 230, 240, 250, 260**) und eine fehlertolerante Nachrichtenverteilereinheit (**100**), FTNVE, umfasst, wobei jeder externe Computer ein externer Sender und/oder ein externer Empfänger von Nachrichten, insbesondere von zeitgesteuerten Nachrichten sein kann,
**dadurch gekennzeichnet, dass**
die FTNVE mindestens vier *Komponenten* (**110, 120, 130, 140**) umfasst, eine erste Komponente (**110**), eine zweite Komponente (**120)**, eine dritte Komponente (**130**), und eine vierte Komponente (**140**),
wobei jede der vier Komponenten (**110, 120, 130, 140)** über zwei oder zumindest zwei unabhängige *Kommunikationsrouten* mit den anderen drei Komponenten der FTNVE verbunden ist, und wobei
diese vier Komponenten (**110, 120, 130, 140)** nach einem Power-up der FTNVE mittels *interner Synchronisationsnachrichten* (**191)** eine fehlertolerante globale Zeit aufbauen und diese während des Betriebs der FTNVE erhalten, und wobei
die vier Komponenten (**110, 120, 130, 140**) mittels *periodischer externer Synchronisationsnachrichten* (**192**) die globale Zeit an die externen Computer (**210, 220, 230, 240, 250, 260)** liefern, und wobei
die externen Computer jeweils ihren lokalen Uhrenstand auf die empfangene globale Zeit stellen, und wobei
zu *a priori* in Zeittabellen festgelegten periodischen Sendezeitpunkten, ausgedrückt in der globalen Zeit, jeder externe Sender einer zeitgesteuerten Nachricht zwei Nachrichtenkopien der zu sendenden Nachricht über zwei unterschiedliche Kommunikationskanäle an zwei unterschiedliche Komponenten der FTNVE übermittelt, und wobei
diese beiden Nachrichtenkopien innerhalb der FTNVE über zwei unabhängige Kommunikationsrouten an jene beiden Komponenten der FTNVE geliefert werden, die über Kommunikationskanäle mit einem externen Empfänger der Nachricht verbunden sind, und wobei
der externe Empfänger die Gültigkeit einer eintreffenden Nachrichtenkopie überprüft und jene gültige Nachrichtenkopie übernimmt, die zuerst eingetroffen ist und die zweite, später eintreffende Nachrichtenkopie verwirft.

2. Verfahren nach Anspruch 1, wobei zum Aufbau und zur Aufrechterhaltung der fehlertoleranten globalen Zeit jede der vier Komponenten (110, 120, 130, 140) einen Oszillator und einen lokalen Tick-Zähler, z.B. einen internen Computer mit einem Oszillator und einem lokalen Tick-Zähler, umfasst, wobei nach einem Power-up der lokale Tick-Zähler jeder Komponente (110, 120, 130, 140) mit einem identischen Wert, vorzugsweise dem Wert Null initialisiert wird, wobei der Wert des lokalen Tick-Zählers einer Komponente in jeder Periode des Oszillators der Komponente um einen festen Wert, vorzugsweise um den Wert 1, erhöht wird, wobei in einer Start-up Phase *nach Power-up* des Zeitservers (100) eine der vier Komponenten, z.B. die erste Komponente (110), eine *Start-up Nachricht* mit einem aktuellen Stand ihres lokalen Tick-Zählers zum Zeitpunkt des Sendens der *Start-up Nachricht* an die anderen Komponenten (120, 130, 140) sendet, und wobei jeder Empfänger (110, 120, 130) der Start-up Nachricht seinen lokalen Tick-Zähler auf den in der Start-up Nachricht enthaltenen Wert, korrigiert um eine *a priori* bekannte Transportverzögerung der Start-up Nachricht, setzt, und wobei zu *a priori* festgelegten periodischen, *internen Synchronisationszeitpunkten* jede der vier Komponenten (110, 120, 130, 140) eine *interne Synchronisationsnachricht,* die den Stand ihres lokalen Tick-Zählers zum Zeitpunkt des Sendens der *internen Synchronisationsnachricht* enthält, gleichzeitig an die anderen drei Komponenten sendet,
und wobei jeder Empfänger einer *internen Synchronisationsnachricht* den Stand seines lokalen Tick-Zählers zum Empfangszeitpunkt der *internen Synchronisationsnachricht* festhält, und die Zeit-Differenz zwischen dem in der *internen Synchronisationsnachricht* enthaltenen Sendezeitpunkt und dem festgehaltenen Empfangszeitpunkt der *internen Synchronisationsnachricht,* korrigiert um die *a priori* bekannte Verzögerung der *internen Synchronisationsnachricht,* ermittelt, und wobei jeder interne Computer einer Komponente aus diesen Zeitdifferenzen entsprechend einem fehlertoleranten Uhrensynchronisations-Algorithmus einen Korrekturterm für den in seiner Komponente enthaltenen Tick-Zähler ermittelt und den Stand des lokalen Tick-Zählers um diesen Korrekturterm korrigiert, und wobei zwei der vier Komponenten, z.B. die erste Komponente (110) und die dritte Komponente (130), je eine *externe Synchronisationsnachricht* (192), die einen *a priori* festgelegten *externen Empfangszeitpunkt* dieser *externen Synchronisationsnachricht* enthält, bilden, wobei beide externen Synchronisationsnachrichten denselben externen Empfangszeitpunkt enthalten, und diese *externen* Synchronisationsnachrichten gleichzeitig zu *a priori* festgelegten periodischen *externen Synchronisationszeitpunkten* jeweils über einen Kommunikationskanal (190) direkt an eine der anderen Komponenten (120, 130), aber nicht an dieselbe der beiden anderen Komponenten, senden, z.B. die erste Komponente (110) an die zweite Komponente (120) und die dritte Komponente (130) an die vierte Komponenten (140), und wobei jede der Komponenten (120, 140) des Zeitservers (100), an welche eine externe Synchronisationsnachricht gesendet wurde, überprüft, ob der in der empfangenen *externen Synchronisationsnachricht* enthaltene *externe Empfangszeitpunkt* gemessen zum Stand ihres lokalen Tick-Zählers zum Zeitpunkt des Empfangs der externen Synchronisationsnachricht so gesetzt ist, wie es durch eine a *priori Planung* des externen Synchronisationszeitpunktes und des externen Empfangszeitpunktes vorgeben ist,
• und falls dies nicht der Fall ist, die *externe Synchronisationsnachricht* verwirft,
• und falls dies der Fall ist, die externe Synchronisationsnachricht über einen externen Kommunikationskontroller (A, B, C) der Komponente (110, 120, 130, 140) an einen externen Empfänger zu einem, insbesondere a priori festgelegten Zeitpunkt, der sicher stellt, dass die *externe Synchronisationsnachricht* zu dem in der *externen Synchronisationsnachricht* enthaltenen *externen Empfangszeitpunkt* beim externen Empfänger eintrifft, weiterleitet,
und wobei jeder externe Empfänger den Zeitpunkt des Empfangs der ersten eintreffenden *externen Synchronisationsnachricht* mit seiner lokalen Uhr festhält und anschließend den Stand seiner lokalen Uhr um die Differenz zwischen dem festgehaltenen Zeitpunkt des Empfangs der *externen Synchronisationsnachricht* und dem in der *externen Synchronisationsnachricht* enthaltenen externen Empfangszeitpunkt korrigiert.

3. Verfahren nach Anspruch 2, wobei Komponenten (**110, 130**), welche eine *externe Synchronisationsnachricht erzeugen,* diese externe Synchronisationsnachricht mit einer elektronischen Unterschrift versehen und der Empfänger dieser externen Synchronisationsnachricht auf Basis dieser elektronischen Unterschrift überprüft, ob die Nachricht gültig ist und die Nachricht verwirft, wenn sie ungültig ist.

4. Verfahren nach Anspruch 2 oder 3, wobei der zeitliche Abstand zwischen zwei externen Synchronisationsnachrichten einer Potenz der SI-Sekunde entspricht.

5. Verfahren nach einem der Ansprüche 2 bis 4, wobei externe Synchronisationsnachrichten (**192**) jeweils ein Datenfeld umfassen, in dem Daten über den internen Zustand des Zeitservers (**100**) enthalten sind.

6. Verfahren nach einem der Ansprüche 1 bis 5, wobei eine zeitgesteuerte Nachricht von ihrem externen Sender mit einer elektronischen Signatur versehen wird und der externe Empfänger anhand dieser Signatur überprüft, ob die zeitgesteuerte Nachricht *semantisch gültig* ist, und wobei der externe Empfänger *semantisch ungültige* Nachrichten verwirft.

7. Verfahren nach einem der Ansprüche 1 bis 6, wobei die FTNVE zumindest einen GPS Empfänger (**150)** umfasst und die *periodischen externen Synchronisationsnachrichten* (**192)** die GPS Zeit verteilen.

8. Fehlertolerante Nachrichtenverteilereinheit, FTNVE, zum Durchführen eines Verfahren nach einem der Ansprüche 1 bis 7,
wobei die FTNVE vier *Komponenten* (**110, 120, 130, 140**) umfasst, eine erste Komponente (**110**), eine zweite Komponente (**120**), eine dritte Komponente (**130**), und eine vierte Komponente (**140**),
wobei jede der vier Komponenten (**110, 120, 130, 140**) über zwei oder zumindest zwei unabhängige *Kommunikationsrouten* mit den anderen drei Komponenten der FTNVE verbunden ist, und wobei
diese vier Komponenten (**110, 120, 130, 140**) nach einem Power-up der FTNVE mittels *interner Synchronisationsnachrichten* (**191**) eine fehlertolerante globale Zeit aufbauen und diese während des Betriebs der FTNVE erhalten, und wobei
die vier Komponenten (**110, 120, 130, 140**) dazu eingerichtet sind, mittels *periodischer externer Synchronisationsnachrichten* (**192**) die globale Zeit an die externen Computer (**210, 220, 230, 240, 250, 260**) liefern, sodass
die externen Computer jeweils ihren lokalen Uhrenstand auf die empfangene globale Zeit stellen, und wobei wenn zu *a priori* in Zeittabellen festgelegten periodischen Sendezeitpunkten, ausgedrückt in der globalen Zeit, jeder externe Sender einer zeitgesteuerten Nachricht zwei Nachrichtenkopien der zu sendenden Nachricht über zwei unterschiedliche Kommunikationskanäle an zwei unterschiedliche Komponenten der FTNVE übermittelt,
die FTNVE dazu eingerichtet ist, diese beiden Nachrichtenkopien innerhalb der FTNVE über zwei unabhängige Kommunikationsrouten an jene beiden Komponenten der FTNVE zu liefern, die über Kommunikationskanäle mit einem externen Empfänger der Nachricht verbunden sind.

9. Nachrichtenverteilereinheit nach Anspruch 8, wobei
ihre *Komponenten* (**110, 120, 130, 140**) mit einer Hardwareeinrichtung ausgestattet sind, die dazu eingerichtet sind, den exakten Zeitpunkt des Eintreffens einer Nachricht in einem Zeitstempel festzuhalten.

10. Verteiltes Echtzeitcomputersystem, welches *externe Computer* (**210, 220, 230, 240, 250,** 260) und eine fehlertolerante Nachrichtenverteilereinheit (100), FTNVE, umfasst, wobei die FTNVE nach einem der Ansprüche 8 oder 9 ausgebildet ist.

11. Verteiltes Echtzeitcomputersystem nach Anspruch 10, wobei die *externen Computer* mit einer Hardwareeinrichtung ausgestattet sind, die dazu eingerichtet ist, den exakten Zeitpunkt des Eintreffens einer Nachricht in einem Zeitstempel festzuhalten.

12. Verteiltes Echtzeitcomputersystem nach Anspruch 10 oder 11, wobei jeder externe Computer (210, 220, 230, 240, 250, 260) mit der FNTVE (100) über zwei Kommunikationskanäle verbunden ist, wobei jeder Kommunikationskanal mit einer anderen Komponente der FNTVE (100) verbunden ist, und wobei die externen Computer dazu eingerichtet sind, jeweils zwei Kopien einer externen Nachricht (192) über die jeweils zwei unabhängigen Kommunikationskanäle, die an den jeweils zwei unterschiedlichen Komponenten der FTNVE (100) enden, an die FTNVE (100) zu senden, und wobei die FTNVE (100) dazu eingerichtet ist, diese beiden Kopien an über zwei unabhängige Kommunikationskanäle an einen andere externen Computer zu übertragen.

## Claims

1. Method for providing a fault-tolerant global time and fault-tolerant transport of time-controlled messages in a distributed real-time computer system comprising external computers (210, 220, 230, 240, 250, 260) and a fault-tolerant message distribution unit (100), FTMDU, wherein each external computer may be an external sender and/or external receiver of messages, in particular of time-controlled messages,
**characterised in that**
the FTMDU comprises at least four components (110, 120, 130, 140), a first component (110), a second component (120), a third component (130), and a fourth component (140),
wherein each of the four components (110, 120, 130, 140) is connected to the other three components of the FTMDU via two or at least two independent communication routes, and wherein
said four components (110, 120, 130, 140), after a power-up of the FTMDU, establish a fault-tolerant global time and maintain it during operation of the FTMDU by means of internal synchronisation messages (191), and wherein
the four components (110, 120, 130, 140) provide the global time to the external computers (210, 220, 230, 240, 250, 260) by means of periodic external synchronisation messages (192), and wherein the external computers set their respective local clock state to the received global time, and wherein at periodic transmission times, determined *a priori* in time tables and expressed in global time, each external sender of a time-controlled message transmits two message copies of the message to be transmitted via two different communication channels to two different components of the FTMDU, and wherein
said two message copies are delivered within the FTMDU via two independent communication routes to those two components of the FTMDU which are connected via communication channels to an external receiver of the message, and wherein
the external receiver checks the validity of an incoming message copy and accepts that valid message copy which arrived first and discards the second, later arriving message copy.

2. Method according to claim 1, wherein for establishing and maintaining the fault-tolerant global time each of the four components (110, 120, 130, 140) comprises an oscillator and a local tick counter, e.g. an internal computer comprising an oscillator and a local tick counter, wherein after power-up the local tick counter of each component (110, 120, 130, 140) is initialised with an identical value, preferably the value zero, wherein the value of the local tick counter of a component is incremented by a fixed value, preferably the value 1, in each period of the oscillator of the component, wherein in a start-up phase after power-up of the time server (100) one of the four components, e.g. the first component (110), sends a start-up message with a current state of its local tick counter at the time of sending the start-up message to the other components (120, 130, 140), and wherein each receiver (110, 120, 130) of the start-up message has its local tick counter set to the value contained in the start-up message, corrected by an *a priori* known transport delay of the start-up message, and wherein at *a priori* determined periodic internal synchronisation times each of the four components (110, 120, 130, 140) simultaneously sends an internal synchronisation message containing the state of its local tick counter at the time of sending the internal synchronisation message to the other three components,
and wherein each receiver of an internal synchronisation message records the state of its local tick counter at the time of receipt of the internal synchronisation message, and determines the time difference between the time of transmission contained in the internal synchronisation message and the recorded time of receipt of the internal synchronisation message, corrected by the *a priori* known delay of the internal synchronisation message, and wherein each internal computer of a component determines, from said time differences and according to an error-tolerant clock synchronisation algorithm, a correction term for the tick counter contained in its component and corrects the state of the local tick counter by this correction term, and wherein two of the four components, e.g. the first component (110) and the third component (130), each form an external synchronisation message (192) containing an *a priori* determined external reception time of said external synchronisation message, wherein both external synchronisation messages contain the same external reception time, and send these external synchronisation messages simultaneously at periodic external synchronisation times *a priori* determined via a respective communication channel (190) directly to one of the other components (120, 130), but not to the same as the other two components, e.g. the first component (110) to the second component (120) and the third component (130) to the fourth component (140), and wherein each of the components (120, 140) of the time server (100) to which an external synchronisation message has been sent checks whether the external reception time contained in the external synchronisation message received, as measured with the state of its local tick counter at the time of reception of the external synchronisation message, is set as predetermined by *a priori* scheduling of the external synchronisation timing and the external reception timing,
- and if this is not the case, discards the external synchronisation message,
- and if this is the case, forwards the external synchronisation message via an external communication controller (A, B, C) of the component (110, 120, 130, 140) to an external receiver at a predetermined time, in particular *a priori* predetermined time, which ensures that the external synchronisation message arrives at the external receiver at the external reception time included in the external synchronisation message,
and wherein each external receiver records the time of reception of the first arriving external synchronisation message with its local clock and subsequently corrects the state of its local clock by the difference between the recorded time of reception of the external synchronisation message and the external reception time contained in the external synchronisation message.

3. Method according to claim 2, wherein components (110, 130) generating an external synchronisation message add an electronic signature to said external synchronisation message, and the receiver of said external synchronisation message verifies whether the message is valid based on said electronic signature and discards the message if it is invalid.

4. Method according to claim 2 or 3, wherein the time interval between two external synchronisation messages corresponds to a power of SI second.

5. Method according to any one of claims 2 to 4, wherein external synchronisation messages (192) respectively comprise a data field containing data about the internal state of the time server (100).

6. Method according to any one of claims 1 to 5, wherein to a time-controlled message an electronic signature is added by its external sender, and the external receiver checks, based on this signature, whether the timed message is semantically valid, and wherein the external receiver discards messages which are semantically invalid.

7. Method according to any of claims 1 to 6, wherein the FTMDU comprises at least one GPS receiver (150) and the periodic external synchronisation messages (192) distribute the GPS time.

8. Fault-Tolerant Message Distribution Unit, FTMDU, configured to perform a method according to any one of claims 1 to 7, wherein the FTMDU comprises four components (110, 120, 130, 140), a first component (110), a second component (120), a third component (130), and a fourth component (140),
wherein each of the four components (110, 120, 130, 140) is connected to the respective other three components of the FTMDU via two or at least two independent communication routes, and wherein
said four components (110, 120, 130, 140), after a power-up of the FTMDU, establish a fault-tolerant global time and maintain it during operation of the FTMDU by means of internal synchronisation messages (191), and wherein
the four components (110, 120, 130, 140) are configured to provide the global time to the external computers (210, 220, 230, 240, 250, 260) by means of periodic external synchronisation messages (192) so that
the external computers each set their local clock state to the received global time, and wherein, when at periodic transmission times determined *a priori* in time tables and expressed in the global time, each external sender of a time-controlled message transmits two message copies of the message to be transmitted via two different communication channels to two different components of the FTMDU,
the FTMDU is arranged to deliver said two message copies within the FTMDU via two independent communication routes to those two components of the FTMDU which are connected via communication channels to an external receiver of the message.

9. Message distribution unit according to claim 8, wherein its components (110, 120, 130, 140) are provided with hardware equipment adapted to record the exact time of arrival of a message in a time stamp.

10. Distributed real-time computer system comprising external computers (210, 220, 230, 240, 250, 260) and a fault-tolerant message distribution unit (100), FTMDU, wherein the FTMDU is formed according to one of claims 8 or 9.

11. Distributed real-time computer system according to claim 10, wherein the external computers are provided with hardware equipment adapted to record the exact time of arrival of a message in a time stamp.

12. Distributed real-time computer system according to claim 10 or 11, wherein each external computer (210, 220, 230, 240, 250, 260) is connected to the FTMDU (100) via two communication channels, wherein each communication channel is connected to a different component of the FTMDU (100), and wherein the external computers are configured to transmit two copies each of an external message (192) to the FTMDU (100) via the two independent communication channels that respectively terminate at the two different components of the FTMDU (100), and wherein the FTMDU (100) is adapted to transmit said two copies to another external computer via two independent communication channels.

## Revendications

1. Procédé de produire un temps global tolérant aux pannes et de transport tolérant aux pannes de messages temporisés dans un système informatique distribué en temps réel comprenant des ordinateurs externes (210, 220, 230, 240, 250, 260) et une unité de distribution de messages tolérants aux pannes (100), dite UDMTP, chaque ordinateur externe pouvant être un émetteur externe et/ou un récepteur externe de messages, en particulier de messages temporisés,
**caractérisé en ce que**
ledit UDMTP comprend au moins quatre composants (110, 120, 130, 140), un premier composant (110), un deuxième composant (120), un troisième composant (130) et un quatrième composant (140),
chacun des quatre composants (110, 120, 130, 140) étant relié aux trois autres composants de l'UDMTP par deux ou au moins deux routes de communication indépendantes, et
lesdits quatre composants (110, 120, 130, 140) établissent, après un power-up de l'UDMTP, un temps global tolérant aux pannes au moyen de messages de synchronisation internes (191) et le maintiennent pendant le fonctionnement de l'UDMTP, et
lesdits quatre composants (110, 120, 130, 140) produisant le temps global aux ordinateurs externes (210, 220, 230, 240, 250, 260) au moyen de messages de synchronisation externes périodiques (192),
et
les ordinateurs externes réglant leur états d'horloge local respectifs sur le temps global reçu, et
à des temps d'émission périodiques, déterminés *a priori* dans des tables de temps et exprimés en temps global, chaque émetteur externe d'un message temporisé transmettant deux copies de message du message à émettre à deux composants différents de l'UDMTP par l'intermédiaire de deux canaux de communication différents, et
ces deux copies de message étant envoyées à l'intérieur de l'UDMTP par deux routes de communication indépendantes aux deux composants de l'UDMTP qui sont reliés par des canaux de communication à un récepteur externe du message, et
le destinataire externe vérifiant la validité d'une copie de message qui arrive et acceptant la copie de message valide qui est arrivée en premier et rejetant la deuxième copie de message qui est arrivée plus tard.

2. Procédé selon la revendication 1, dans lequel, pour établir et maintenir le temps global tolérant aux pannes, chacun des quatre composants (110, 120, 130, 140) comporte un oscillateur et un compteur local de ticks, par exemple un ordinateur interne avec un oscillateur et un compteur de ticks local, dans lequel, après une mise sous tension, le compteur de ticks local de chaque composant (110, 120, 130, 140) est initialisé avec une valeur identique, de préférence la valeur zéro, la valeur du compteur de ticks local d'un composant étant augmentée d'une valeur fixe, de préférence de la valeur 1, à chaque période de l'oscillateur du composant,
dans une phase de démarrage après la mise sous tension du serveur de temps (100), un des quatre composants, par exemple le premier composant (110), envoie aux autres composants (120, 130, 140) un message de démarrage avec un état actuel de son compteur de ticks local au temps de l'envoi du message de démarrage, et chaque récepteur (110, 120, 130) du message de démarrage règle son compteur de ticks local à la valeur contenue dans le message de démarrage, corrigé par un retard de transport connu *a priori* du message de démarrage, et, à des tempss de synchronisation interne périodiques définis *a priori,* chacun des quatre composants (110, 120, 130, 140) envoie simultanément aux trois autres composants un message de synchronisation interne qui contient l'état de son compteur de ticks local au temps de l'envoi du message de synchronisation interne, et chaque récepteur d'un message de synchronisation interne enregistrant l'état de son compteur de ticks local au temps de la réception du message de synchronisation interne, et déterminant la différence de temps entre le temps d'émission contenu dans le message de synchronisation interne et le temps de réception enregistré du message de synchronisation interne, corrigé par le retard connu *a priori* du message de synchronisation interne, et chaque ordinateur interne d'un composant déterminant à partir de ces différences de temps, conformément à un algorithme de synchronisation de temps tolérant aux pannes, un terme de correction pour le compteur de ticks contenu dans son composant et corrige l'état du compteur de ticks local de ce terme de correction, et deux des quatre composants, par example le premier composant (110) et le troisième composant (130), formant chacun un message de synchronisation externe (192) qui contient un temps de réception externe déterminé *a priori* de ce message de synchronisation externe, les deux messages de synchronisation externes contenant le même temps de réception externe, et ces messages de synchronisation externes étant envoyés simultanément à des temps de synchronisation externes périodiques déterminés *a priori,* chacun par l'intermédiaire d'un canal de communication (190), directement à l'un des autres composants (120, 130), mais pas au même des deux autres composants, par exemple le premier composant (110) au deuxième composant (120) et le troisième composant (130) au quatrième composant (140), et chacun des composants (120, 140) du serveur de temps (100), auquel un message de synchronisation externe a été envoyé, vérifiant si le temps de réception externe contenu dans le message de synchronisation externe qui a été reçu, mesuré par rapport à l'état de son compteur de ticks local au temps de la réception du message de synchronisation externe, est réglé comme cela est prescrit par une planification *a priori* du temps de synchronisation externe et du temps de réception externe,
- et si ce n'est pas le cas, rejetant le message de synchronisation externe,
- et si c'est le cas, transmettant le message de synchronisation externe par l'intermédiaire d'un contrôleur de communication externe (A, B, C) du composant (110, 120, 130, 140) à un récepteur externe à un temps, en particulier un temps déterminé *a priori,* qui garantit que le message de synchronisation externe arrive au récepteur externe au temps de réception externe contenu dans le message de synchronisation externe,
et chaque récepteur externe enregistrant le temps de réception du premier message de synchronisation externe arrivant avec son temps locale et corrigeant ensuite l'état de son temps locale de la différence entre le temps enregistré de réception du message de synchronisation externe et le temps de réception externe contenu dans le message de synchronisation externe.

3. Procédé selon la revendication 2, dans lequel des composants (110, 130) qui génèrent un message de synchronisation externe ajoutent une signature électronique audit message de synchronisation externe et le destinataire dudit message de synchronisation externe vérifie, à l'aide de cette signature électronique, si le message est valide et rejette le message s'il n'est pas valide.

4. Procédé selon la revendication 2 ou 3, dans lequel l'intervalle de temps entre deux messages de synchronisation externes correspond à une puissance de la seconde SI.

5. Procédé selon l'une quelconque des revendications 2 à 4, dans lequel les messages de synchronisation externes (192) comportent chacun un champ de données dans lequel sont contenues des données relatives à l'état interne du serveur de temps (100).

6. Procédé selon l'une quelconque des revendications 1 à 5, dans lequel un message temporisé est muni d'une signature électronique par son émetteur externe et le destinataire externe vérifie à l'aide de cette signature si le message temporisé est sémantiquement valide, et le destinataire externe rejette les messages qui sont sémantiquement invalides.

7. Procédé selon l'une quelconque des revendications 1 à 6, dans lequel l'UDMTP comprend au moins un récepteur GPS (150) et les messages périodiques de synchronisation externe (192) distribuent l'heure GPS.

8. Unité de distribution de messages à tolérance de panne, UDMTP, pour mettre en œuvre un procédé selon l'une quelconque des revendications 1 à 7, dans laquelle la UDMTP comprend quatre composants (110, 120, 130, 140), un premier composant (110), un deuxième composant (120), un troisième composant (130) et un quatrième composant (140),
chacun des quatre composants (110, 120, 130, 140) étant relié aux trois autres composants de l'UDMTP par deux ou au moins deux routes de communication indépendantes, et
lesdits quatre composants (110, 120, 130, 140) établissant, après un power-up de l'UDMTP, au moyen de messages de synchronisation internes (191), un temps global tolérant aux pannes et le maintiennent pendant le fonctionnement de l'UDMTP, et
lesdits quatre composants (110, 120, 130, 140) sont configurés pour produire le temps global aux ordinateurs externes (210, 220, 230, 240, 250, 260) au moyen de messages de synchronisation externes périodiques (192), de sorte que
les ordinateurs externes règlent leur états d'horloge local respectifs sur le temps global reçu, et, quand, à des temps d'émission périodiques, déterminés *a priori* dans des tables de temps et exprimés en temps global, chaque émetteur externe d'un message à l'heure programmée transmet deux copies de message du message à émettre par deux canaux de communication différents à deux composants différents de l'UDMTP,
l'unité UDMTP est agencée pour envoyer ces deux copies de message à l'intérieur de l'unité UDMTP par deux routes de communication indépendantes aux deux composants de l'unité UDMTP qui sont reliés par des canaux de communication à un récepteur externe du message.

9. Unité de distribution de messages selon la revendication 8, dans laquelle ses composants (110, 120, 130, 140) sont équipés d'un dispositif matériel agencé pour enregistrer le temps exacte d'arrivée d'un message dans un horodateur.

10. Système informatique de temps réel distribué comportant des ordinateurs externes (210, 220, 230, 240, 250, 260) et une unité de distribution de messages à tolérance de panne (100), UDMTP, laquelle UDMTP est configurée selon l'une des revendications 8 ou 9.

11. Système informatique de temps réel distribué selon la revendication 10, dans lequel les ordinateurs externes sont équipés d'un dispositif matériel agencé pour enregistrer dans un horodatage le temps exact d'arrivée d'un message.

12. Système informatique de temps réel distribué selon la revendication 10 ou 11, dans lequel chaque ordinateur externe (210, 220, 230, 240, 250, 260) est connecté à l'UDMTP (100) par deux canaux de communication, chaque canal de communication étant connecté à un composant différent de l'UDMTP (100), et les ordinateurs externes étant agencés pour envoyer respectivement deux copies d'un message externe (192) à l'UDMTP (100) via les deux canaux de communication indépendants respectifs qui se terminent aux deux composants différents respectifs de l'UDMTP (100), et l'UDMTP (100) étant agencé pour transmettre lesdits deux copies à un autre ordinateur externe via deux canaux de communication indépendants.
